# EUROPÄISCHE PATENTSCHRIFT

(11) **EP 3 067 998 B1**
(45) Veröffentlichungstag und Bekanntmachung des Hinweises auf die Patenterteilung: **20.02.2019**
(21) Anmeldenummer: 16158515.3
(22) Anmeldetag: 03.03.2016
(51) Int. Cl.: H01R 25/14, H02G 3/04

(54) **BAUSATZ FÜR EIN STROMSCHIENENSYSTEM**
KIT FOR A BUSBAR SYSTEM
JEU DE PIECES DETACHEES POUR UN SYSTEME DE BARRES CONDUCTRICES

(30) Priorität: 09.03.2015 DE 202015101171 U
(43) Veröffentlichungstag der Anmeldung: 14.09.2016
(73) Patentinhaber: REHAU AG + Co, 95111 Rehau (DE)
(72) Erfinder: Hollering, Stefan, 95111 Rehau (DE); Schwarz, Michael, 95100 Selb (DE)

(56) Entgegenhaltungen:
- WO-A1-2009/118715
- DE-A1- 2 100 531
- DE-A1- 10 025 648
- US-B1- 6 333 461

## Beschreibung

Die Erfindung betrifft einen Bausatz für ein Stromschienensystem, welches zumindest teilweise polymere Werkstoffe aufweist, das zumindest drei in Längsrichtung des Stromschienensystems verlaufende Abschnitte umfasst, wobei die drei Abschnitte zu einem das Stromschienensystem bildenden, wenigstens teilweise einen Hohlraum umschließenden, Hohlkörper verbindbar sind, wobei die drei Abschnitte im Wesentlich eben und flexibel sind und von einem ersten Zustand, in welchem die Abschnitte beweglich und von einer ebenen oder parallelen Anordnung aufrollbar sind in einen zweiten Zustand, in welchem die Abschnitte das Stromschienensystem bilden, überführbar sind.

Derartige Bausätze sowie auch Stromschienensysteme selbst sind aus dem Stand der Technik bereits bekannt. So beschreibt beispielsweise die DE 2100531 A ein derartiges Stromschienensystem. Es wird eine Stromverteilerschiene für Stromabnehmer, wie Leuchten, elektrische Geräte oder dergleichen offenbart, welche eine über die gesamte Länge der Stromverteilerschiene verlaufende, ein Verstärkungsmittel bildende Metallschiene mit C-förmigen Querschnitt von einem Isoliermittel, vorzugsweise einer Kunststoffummantelung umgeben ist und innerhalb dieser Kunststoffummantelung oder eines darin eingesetzten Isolierteils mehrere bis auf die Kontaktstelle eingebettete und jeweils durch eine über die gesamte Stromverteilerschienenlänge verlaufende Einführöffnung vom Schienen-Innenraum her zur Stromabnahme zugängliche elektrische Leiter und mindestens einen vorzugsweise zwei mit der Metallschiene in Berührung stehende und durch Ausnehmungen der Kunststoffummantelung von dem Schienen-Innenraum her zugängliche Schutzleiter aufweist, sowie dieselbe zwei sich gegenüberliegende, über die gesamte Stromverteilerschienenlänge verlaufende, in der Kunststoffummantelung vorgesehene und vom Schienen-Innenraum her zugängliche Befestigungsnuten für die Befestigung eines Adapters besitzt. Diese Stromverteilerschiene soll eine hohe elektrische Sicherheit gewährleisten, mit mehreren Stromkreisen ausrüstbar sein und einen Adapter in einfacher Weise lagemäßig sicher an jeden Punkt aufnehmen zu können.

Die WO 2009/118715 A1 beschreibt einen Kanal, der einen langgestreckten Streifen mit flachen Anteilen aufweist, der es ermöglicht, daß er um eine Achse quer zu seiner Länge aufgerollt wird. Der Streifen ist aus Kunststoff geformt und weist gegenüberliegende Seitenkanten auf, die sich in Längsrichtung erstrecken. Der Streifen umfasst auch mindestens drei längs verlaufende, in Längsrichtung angeordnete längliche Platten mit Scharnieren zwischen den jeweiligen Platten. Diese Scharniere ermöglichen es, dass der Streifen um eine Längsachse aufgerollt wird, um eine röhrenförmige Struktur mit polygonalem Querschnitt zu bilden. In der röhrenförmigen Struktur werden zusammenwirkende Randformationen an den gegenüberliegenden Seitenkanten zu einer Ecke der röhrenförmigen Struktur zusammengeklemmt. Es gibt auch zusammenwirkende Eckformationen auf gegenüberliegenden Seiten von mindestens einem anderen der Scharniere. Diese Formationen können auch an den entsprechenden Ecken des polygonalen Querschnitts zusammengeklemmt werden. Die DE 100 25 648 A1 offenbart ein Stromschienensystem für Leuchten mit mehreren modular miteinander verbindbaren U- förmigen Tragschienen sowie einem von den Tragschienen gehaltenen Stromleitprofil, welches in Längsrichtung der Tragschienen verlaufende und von einer Kontaktierungsseite her zugängliche Nuten zur Aufnahme von Drähten für die Stromversorgung und / oder Übertragung von Steuersignalen aufweist, wobei zum Verbinden der Stromleitprofile in zwei benachbarten Tragschienen ein Verbindungselement vorgesehen ist, welches den Nuten der Stromleitprofile entsprechende rillenförmige Ausnehmungen aufweist, in die jeweils ein Metallverbinder eingesetzt ist, an den die in den Nuten der Stromleitprofile anzuordnenden und miteinander zu verbindenden Drähte von beiden Seiten her anschließbar sind. Die Verbindung der jeweiligen Seitenflügel erfolgt in regelmäßigen Abständen über separate Verbindungsstege.

Nachteilig bei diesem Stromschienensystem wird gesehen, das insbesondere die Herstellung sich sehr aufwendig und teuer gestaltet, da hier sehr viele verschiedene Materialien in verschiedenen Arbeitsgängen miteinander in Verbindung gebracht werden müssen.

Weiterhin nachteilig bei diesem Stromschienensystem ist, dass dieses nur in definierten Fixlängen herstellbar ist und das bei bestimmungsgemäßer Montage eine sehr aufwendige Anpassung der unterschiedlich zu montierenden Stromschienenlängen und deren sichere elektrische Kontaktierung erforderlich ist.

Dieses Stromschienensystem weist noch den immanenten Nachteil auf, dass aufgrund der Geometrie und der verwendeten Werkstoffe dieses nur in definierten Fixlängen herstellbar, transportierbar sowie montierbar ist. Auch eine Montage in einem Radius ist mit diesem Stromschienensystem nicht möglich.

Hier setzt die Erfindung ein, die sich die Aufgabe gestellt hat, die Nachteile des bekannten Standes der Technik zu überwinden und einen Bausatz für ein Stromschienensystem aufzuzeigen, welches einfach, kostengünstig und wirtschaftlich herstellbar ist und welches erheblich einfacher zu transportieren ist als herkömmliche, gattungsgemäße Bausätze.

Die Aufgabe wird durch die Merkmale des Anspruches 1 gelöst. Weitere vorteilhafte Ausgestaltungen sind in den Unteransprüchen beschrieben.

Es hat sich überraschend herausgestellt, dass ein Bausatz für ein Stromschienensystem, welches zumindest teilweise polymere Werkstoffe aufweist, das zumindest drei in Längsrichtung des Stromschienensystems verlaufende Abschnitte umfasst, wobei die drei Abschnitte zu einem das Stromschienensystem bildenden, wenigstens teilweise einen Hohlraum umschließenden, Hohlkörper verbindbar sind, wobei die drei Abschnitte im Wesentlichen eben und flexibel sind und von einem ersten Zustand (eZ), in welchem die Abschnitte beweglich und von einer ebenen oder parallelen Anordnung aufrollbar sind in einen zweiten Zustand (zZ), in welchem die Abschnitte das Stromschienensystem bilden, überführbar sind, wobei die Abschnitte über wenigstens ein flexibles Element gelenkig miteinander verbunden sind und wobei zumindest zwei Abschnitte wenigstens eine Verbindungsvorrichtung aufweisen, sich dadurch auszeichnet, dass wenigstens ein Abschnitt wenigstens ein in Längsrichtung des Stromschienensystems in einer Nut verlaufend angeordnetes, elektrisch leitfähiges Element aufweist, dass wenigstens ein Abschnitt wenigstens ein Versteifungselement aufweist, dass das Versteifungselement die Abschnitte miteinander verbindet, dass das Versteifungselement zwischen den Abschnitten als flexibles Element ausgebildet ist, dass das Versteifungselement etwa mittig in dem Abschnitt angeordnet ist. Durch diesen erfindungsgemäßen Bausatz für ein Stromschienensystem kann der gesamte Bausatz beispielsweise zum Transport oder bei einer Lagerung sehr platzsparend angeordnet werden. Insbesondere bei der Herstellung des Bausatzes für ein Stromschienensystem kann dieser gleich zu bestimmten Längen zurechtgeschnitten, zu einer Rolle aufgerollt und verkaufsfertig verpackt werden.
Eine Längenbeschränkung des erfindungsgemäßen Bausatzes für ein Stromschienensystem aus transporttechnischen Gründen ist nicht erforderlich.
Weiterhin weist der erfindungsgemäße Bausatz für ein Stromschienensystem einen äußerst geringen Platzbedarf und insbesondere auf der Baustelle eine erheblich verbesserte Handhabbarkeit auf als vergleiche Stromschienensysteme aus dem Stand der Technik.
Der erfindungsgemäße Bausatz für ein Stromschienensystem zeichnet sich weiterhin dadurch aus, dass einzeln verpackte, aufgerollte Bausätze in Baumärkten oder Installationsfirmen platzsparend und kompakt stapelbar sind. Der Kunde bzw. der Monteur kann ohne Aufwand den entsprechenden Bausatz in der von ihm gewünschten Abmessung ablängen und an den gewünschten Montageplatz transportieren.

Der aus dem Stand der Technik bekannte Konfektionsaufwand zur Zusammenstellung von Stromschienensystemen kann radikal reduziert bzw. sogar vollständig vermieden werden, insbesondere wenn die Abschnitte über das flexible Element, welches als Filmscharnier ausgebildet ist, miteinander verbunden sind.

Ebenfalls vorteilhaft bei dem Bausatz für ein Stromschienensystem wird gesehen, dass die einzelnen Anschnitte aus einem polymeren Werkstoff hergestellt sind, wie Polyvinylchlorid (PVC); Polyolefin, wie Polypropylen (PP) oder Polyethylen (PE); einem styrolbasiertem Polymer, wie Polystyrol (PS) oder Styrol-Butadien-Copolymer mit überwiegendem Styrolanteil (SB) oder Acrylnitril-Styrol-Acrylester-Copolymere (ASA) oder Acrylnitril-Butadien-StyrolCopolymere (ABS) oder Styrolacrylnitril (SAN); Polybutylentherephthalat (PBT); Polyethylentherephthalat (PET); Polyoxymethylen (POM); Polyamid (PA); Polymethylmethacrylat (PMMA); Polyphenylenoxid (PPO); Polyetheretherketon (PEEK); Polyphenylensulfid (PPS); Liquid Crystal Polymer (LCP); Polyamidimide (PAI); Polyvinylidenfluorid (PVDF); Polyphenylsulfon (PPSU); Polyaryletherketon (PAEK); Polyacrylnitril (PAN); Polychlortrifluorethylen (PCTFE); Polyetherketon (PEK); Polyimid (PI); Polybuten (PB); Polyisobuten (PIB); Polycarbonat (PC); Polyphthalamid (PPA); Polypyrrol (PPY);Polytetrafluorethylen (PTFE); Polyurethan (PUR); Polyvinylalkohol (PVA); Polyvinylacetat (PVAC); Polyvinylidenchlorid (PVDC) sowie Mischungen aus wenigstens zwei diesen Materialien. Dabei können dem polymeren Werkstoff geeignete Füll- und / oder Verstärkungsstoffe beigemischt sein, die die mechanischen Eigenschaften positiv beeinflussen insbesondere Glasfasern, Glaskugeln aber auch Füllstoffe wie Kreide, Teflon und dergleichen. Die Füll- und / oder Verstärkungsstoffe sind dabei in Mengen von etwa 5 bis 50 Gew.-%, vorzugsweise 10 bis 35 Gew.-%, bezogen auf die Gesamtmasse, enthalten. Hierdurch kann der Bausatz für ein Stromschienensystem bspw. im an sich bekannten Extrusions- bzw. auch im Koextrusionsverfahren kostengünstig und in der entsprechenden Farbenvielfalt hergestellt werden.
Der polymere Werkstoff des Bausatzes für ein Stromschienensystem kann dabei eine Härte Shore D gemäß DIN EN ISO 868 von etwa 40 bis 80, bevorzugt 40 bis 70 aufweisen.

Der erfindungsgemäße Bausatz für ein Stromschienensystem zeichnet sich weiterhin dadurch aus, dass das flexible Element als Weichscharnier ausgebildet ist. In diesem vorteilhaften Ausführungsbeispiel besteht das flexible Element aus einem Werkstoff, der eine geringere Härte Shore A von etwa 80 gemäß DIN EN ISO 868 als der Werkstoff der einzelnen Abschnitte aufweist. Dabei hat sich ebenfalls als vorteilhaft herausgestellt, dass das flexible Element aus einem weichelastischen, polymeren Werkstoff hergestellt ist, mit einer Härte Shore A gemäß DIN EN ISO 868 von etwa 60 bis 100, bevorzugt 60 bis 90.

Der erfindungsgemäße Bausatz für Stromschienensysteme ist weiterhin so ausgebildet, dass das wenigstens eine Verbindungsvorrichtung an wenigsten einem flexiblen Element angeordnet ist. Durch diese vorteilhafte Ausgestaltung ist es sehr einfach möglich, drei Abschnitte von einem ersten Zustand, in welchem sie beweglich und einer ebenen oder parallelen Anordnung aufrollbar sind in den zweiten Zustand, in welchem die Abschnitte das Stromschienensystem bilden, zu überführen.

Ein weiterer Vorteil des erfindungsgemäßen Stromschienensystems besteht darin, dass die Verbindungsvorrichtung wenigstens zwei, voreinander durch wenigstens ein flexibles Element beabstandet angeordnete, Verbindungselement aufweist. Hierdurch ist einerseits eine kostengünstige und wirtschaftliche Herstellung des erfindungsgemäßen Stromschienensystems gewährleistet, während andererseits eine einfache Montage der einzelnen Abschnitte zum erfindungsgemäßen Stromschienensystem realisierbar ist.

Das Verbindungselement kann dabei so ausgebildet sein, dass es mithilfe eines an sich bekannten Klebstoffes beschichtet ist und so eine stoffschlüssige Verbindung mit dem gegenüberliegend angeordneten Verbindungselement eingeht. Das Verbindungselement kann auch weiterhin so ausgebildet sein, dass es eine kraftschlüssige bzw. formschlüssige Verbindung mit dem ihm gegenüberliegenden Verbindungselement eingeht und beispielsweise als Rasthaken, Rastnase, Rastelement ausgebildet ist.

Es hat sich weiterhin als vorteilhaft herausgestellt bei dem erfindungsgemäßen Stromschienensystem, dass wenigstens ein Abschnitt wenigstens ein Versteifungselement aufweist. Hierdurch ist es möglich, auch große Längen des erfindungsgemäßen Stromschienensystems fachgerecht zu montieren bzw. zu fixieren.
Das Versteifungselement kann dabei vorteilhafterweise aus einem metallischen, polymeren, duromeren bzw. keramischen Werkstoff hergestellt sein.
In einer vorteilhaften Ausgestaltung ist das Versteifungselement als Band bzw. Folie aus Metall, insbesondere aus Aluminium, Eisen bzw. Edelstahl hergestellt und weist eine Dicke von etwa 0,2 bis 0,8 mm, insbesondere 0,2 bis 0,5 mm auf. Es liegt jedoch auch im Rahmen der Erfindung, dass das Versteifungselement aus einem polymeren Werkstoff hergestellt ist, der mit Verstärkungsstoffen bzw. Verstärkungselementen wie beispielsweise Glaskugeln, Glasfasern bzw. Endlosfasern der einen Anteil von etwa 5 bis 50 Gew.-%, vorzugsweise 10 bis 30 Gew.-% aufweist.
Das Versteifungselement kann dabei auch so ausgebildet sein, dass es voneinander beabstandet in jedem einzelnen Abschnitt des erfindungsgemäßen Stromschienensystems angeordnet ist. Hierdurch können unterschiedliche Festigkeitswerte der einzelnen Abschnitte des erfindungsgemäßen Stromschienensystems den Bedürfnissen der Kunden entsprechend angepasst werden.

Dabei hat es sich weiterhin als äußerst vorteilhaft herausgestellt, dass zumindest zwei Abschnitte, vorzugsweise drei Abschnitte in etwa die gleiche Wandstärke aufweisen. Dies lässt ein kostengünstiges und wirtschaftliches Herstellen des erfindungsgemäßen Stromschienensystems zu.

Ebenfalls vorteilhaft bei dem erfindungsgemäßen Stromschienensystem ist, dass das Versteifungselement etwa mittig in dem Abschnitt angeordnet ist. Diese Ausgestaltung des erfindungsgemäßen Stromschienensystems führt dazu, dass insbesondere die Herstellung kostengünstig und wirtschaftlich realisierbar ist, während gleichzeitig die Steifigkeit und der mögliche Längsverzug des gesamten Stromschienensystems weiter optimiert ist.

Das erfindungsgemäße Stromschienensystem ist vorteilhafterweise weiterhin so ausgebildet, dass das Versteifungselement die Abschnitte miteinander verbindet. Neben der Stabilisierung der Abschnitte des erfindungsgemäßen Stromschienensystems sind hierdurch auch die Anforderungen an die elektrische Sicherheit gemäß der DIN EN 60570 sowie der DIN EN 60598 vollumfänglich realisierbar.
Es hat sich weiterhin als vorteilhaft bei dem erfindungsgemäßen Stromschienensystem herausgestellt, dass das Versteifungselement zwischen den Abschnitten als flexibles Element ausgebildet ist. Hierdurch lässt sich eine kostengünstige und wirtschaftliche Herstellung des erfindungsgemäßen Stromschienensystems realisieren und das Überführen der einzelnen Abschnitte vom ersten Zustand (eZ) in den zweiten Zustand (zZ) ist sehr einfach und über große Längen der einzelnen Abschnitte möglich.
Das erfindungsgemäße Stromschienensystem zeichnet sich außerdem dadurch aus, dass das Versteifungselement die Abschnitte des Stromschienensystems so miteinander verbindet, dass beim Überführen der einzelnen Abschnitte vom ersten Zustand (eZ) in den zweiten Zustand (zZ) keine zusätzlichen Verbindungsvorrichtungen bzw. Rastvorrichtungen oder an sich bekannte Klebstoffe erforderlich sind.
Bei dem erfindungsgemäßen Stromschienensystem hat sich auch als vorteilhaft herausgestellt, dass die Abschnitte einstückig miteinander verbunden sind. Durch diese Ausgestaltung ist eine einfache, kostengünstige und wirtschaftliche Herstellung möglich.
Es hat sich weiterhin als vorteilhaft bei dem erfindungsgemäßen Stromschienensystem herausgestellt, dass die in der Nut angeordneten, elektrisch leitfähigen, Elemente äquidistant zueinander angeordnet sind. Hierdurch kann ebenfalls eine kostengünstige und wirtschaftliche Herstellung des erfindungsgemäßen Stromschienensystems realisiert werden, während gleichzeitig bei bestimmungsgemäßer Verwendung des erfindungsgemäßen Stromschienensystems viele verschiedene Adapter und elektrisch Elemente in dieses montierbar und betreibbar sind.

Das elektrisch leitfähige Element kann dabei aus einem metallischen Werkstoff wie beispielsweise Kupfer, Aluminium, Eisen und dergleichen bestehen und weist im Querschnitt eine etwa runde, halbrunde, ovale, prismatische, mehreckige Kontur auf.
Es liegt jedoch auch im Rahmen der Erfindung, dass das elektrisch leitfähige Element wenigstens teilweise aus einem leitfähigen, polymeren Werkstoff besteht.
Diese leitfähigen, polymeren Werkstoffe sind einerseits sogenannte elektrisch selbstleitende Polymere, bei denen die Leitfähigkeit durch konjugierte Doppelbindungen erreicht wird, die eine freie Beweglichkeit von Ladungsträgern ermöglichen. Die elektrische Leitfähigkeit der leitfähigen Polymere liegt dabei im Bereich von 10⁻¹³ bis 10³ S/cm bzw. 10⁻¹¹ bis 10⁵ S/cm. Leifähige Polymere sind beispielsweise Polyacetylen, Polyanilin, Polyparaphenylen, Polypyrrol, Polythiophen.
Diese leitfähigen, polymeren Werkstoffe sind andererseits sogenannte elektrisch leitfähig eingestellte Polymere, die selbst den Strom nicht leiten, sondern dies wird durch Leitfähigkeitsadditive realisiert wie bspw. Ruß, Graphit, Metallpartikel, Kohlenstoff-Nanoröhrchen, Kohlenstoff-Fasern, metallbeschichtete Glasfasern, Keramik-Whisker.

Es hat sich auch als vorteilhaft bei dem erfindungsgemäßen Stromschienensystem herausgestellt, dass die in der Nut angeordneten, elektrisch leitfähigen, Elemente alternierend zueinander angeordnet sind. Neben der ebenfalls kostengünstigen Herstellung kann hier bei bestimmungsgemäßer Verwendung des erfindungsgemäßen Stromschienensystems ebenfalls verschiedenste Adapter und elektrische Abnehmer mit dem erfindungsgemäßen Stromschienensystem betrieben werden.

Die Erfindung soll nun diesen nicht einschränkenden Ausführungsbeispielen näher beschrieben werden.
Es zeigen:
- Fig. 1a:: Schnittdarstellung eines Bausatzes für ein erfindungsgemäßes Stromschienensystem im ersten Zustand (eZ);
- Fig. 1b:: Schnittdarstellung eines Bausatzes für ein erfindungsgemäßes Stromschienensystem im zweiten Zustand (zZ);

- Fig. 2a:: Schnittdarstellung eines Bausatzes für ein weiteres Stromschienensystem im ersten Zustand (eZ);
- Fig. 2b:: Schnittdarstellung eines Bausatzes für ein weiteres Stromschienensystem im zweiten Zustand (zZ).
- Fig. 3a:: Schnittdarstellung eines Bausatzes für ein weiteres Stromschienensystem im ersten Zustand (eZ);
- Fig. 3b:: Schnittdarstellung eines Bausatzes für ein weiteres Stromschienensystem im zweiten Zustand (zZ).

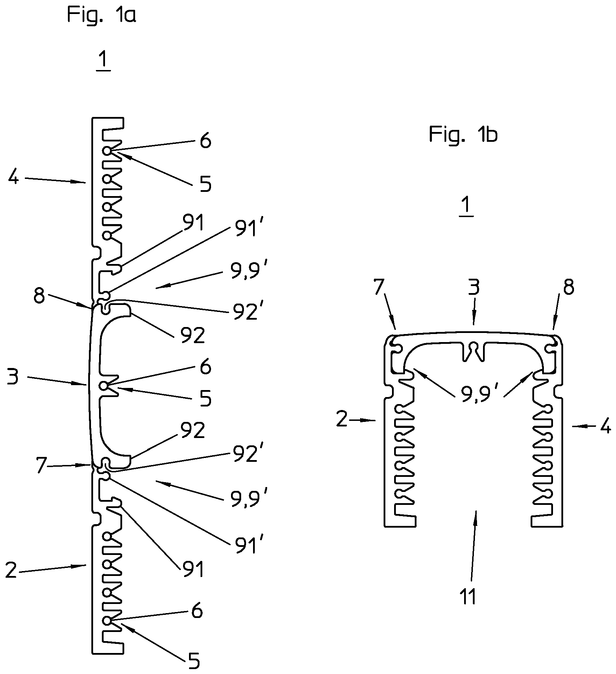

Die Fig. 1a zeigt eine Schnittdarstellung eines Bausatzes für ein erfindungsgemäßes Stromschienensystem 1 im ersten Zustand (eZ).
Das Stromschienensystem 1 weist drei in Längsrichtung verlaufende Abschnitte 2, 3, 4 auf, wobei die drei Abschnitte 2, 3, 4 zu einem das Stromschienensystem 1 bildenden Hohlkörper verbindbar sind, wobei die drei Abschnitte 2, 3, 4 im Wesentlichen eben und flexibel sind.

In diesem Ausführungsbeispiel weist der Abschnitt 2, 4 jeweils vier in Längsrichtung des Stromschienensystems 1 in jeweils einer Nut 5 verlaufend angeordnete, elektrisch leitfähige Elemente 6 auf.
Die Abschnitte 2, 3, 4 sind in diesem Ausführungsbeispiel einstückig miteinander verbunden, bestehen aus polymerem Werkstoff Polyvinylchlorid (PVC) und weisen in etwa die gleichen Wandstärke auf.
Das Stromschienensystem 1 weist weiterhin zwei flexible Elemente 7, 8 auf, wobei das flexible Element 7 den Abschnitt 2 mit den Abschnitt 3 verbindet und das flexible Element 8 den Abschnitt 3 mit den Abschnitt 4.
In diesem Ausführungsbeispiel ist das flexible Element 7, 8 als Weichscharnier ausgebildet und aus einem weichelastischen polymeren Werkstoff hergestellt mit einer Härte Shore A gemäß DIN EN ISO 868 von etwa 80

In diesem Ausführungsbeispiel ist am flexiblen Element 7, 8 jeweils eine Verbindungsvorrichtung 9, 9' angeordnet. Die Verbindungsvorrichtung 9, 9' weist jeweils zwei voneinander durch das flexible Element 7, 8 beabstandet angeordnete, Verbindungselemente 91, 91', 92, 92' auf.
Der Abschnitt 3 des Stromschienensystems 1 ist in diesem Ausführungsbeispiel so ausgebildet, dass er etwa mittig eine Nut 5 aufweist, in der ein elektrisch leitfähiges Element 6 angeordnet ist.
Das elektrisch leitfähige Element 6, welches in jeweils einer Nut 5 am Abschnitt 2, 3, 4 angeordnet ist, ist in diesem Ausführungsbeispiel als in Profillängsrichtung ausgebildeter Draht aus Metall ausgebildet.

In der Fig. 1b ist eine Schnittdarstellung eines Bausatzes für ein erfindungsgemäßes Stromschienensystem 1 im zweiten Zustand (zZ) dargestellt.
Das Stromschienensystem 1 weist zumindest drei in Längsrichtung des Stromschienensystem 1 verlaufende Abschnitte 2, 3, 4 auf, wobei die drei Abschnitte 2, 3, 4 zu einem das Stromschienensystem 1 bildenden, wenigstens teilweise einen Hohlraum 11 umschließenden Hohlkörper verbunden sind, wobei die drei Abschnitte 2, 3, 4 in dem zweiten Zustand (zZ) so angeordnet sind, in dem die Abschnitte 2, 3, 4 das Stromschienensystem 1 bilden.

In diesem zweiten Zustand (zZ) sind die Abschnitte 2, 4 etwa orthogonal zum Abschnitt 3 des Stromschienensystems 1 angeordnet.
Die Verbindungsvorrichtungen 9, 9' der Abschnitte 2, 3, 4 sind kraftschlüssig und / oder formschlüssig so miteinander verbunden, dass die Abschnitte 2, 3, 4 einen, einen Hohlraum 11 umschließenden, Hohlkörper ausbilden.

Die Abschnitte 2, 4 des Stromschienensystems 1 werden von einem ersten Zustand (eZ), in welchem die Abschnitte gemäß Fig. 1a beweglich und von einer ebenen oder parallelen Anordnung aufrollbar sind nun in den zweiten Zustand (zZ) in welchem die Abschnitte 2, 3, 4 das Stromschienensystem bilden, überführt.

Durch Verschwenken der Abschnitte 2, 4 des Stromschienensystems 1 über das flexible Element 7, 8 ist es nun möglich, dass die Verbindungselemente 91, 91' des Abschnittes 2 sowie die Verbindungselemente 91, 91' des Abschnittes 4 mit den Verbindungselementen 92, 92' des Abschnittes 3 in Wirkverbindung stehen.
Dabei verrastet jeweils das Verbindungselement 91, 91' im jeweils gegenüberliegend angeordneten, durch das flexible Element 7, 8 beabstandet, angeordneten Verbindungselement 92, 92' des Abschnittes 3.

In diesem Ausführungsbeispiel der Fig. 1a und Fig. 1b sind die in der Nut 5 der Abschnitte 2, 4 des Stromschienensystems 1 angeordneten, elektrisch leitfähigen, Elemente 6 äquidistant zueinander angeordnet.

Weiterhin ist das erfindungsgemäße Stromschienensystem 1 so ausgebildet, dass die jeweiligen elektrisch leitfähigen Elemente 6 des Abschnittes 2 genau gegenüberliegend zu den elektrisch leitfähigen Elementen 6 des Abschnittes 4 angeordnet sind, so dass bei bestimmungsgemäßen Einsatz des erfindungsgemäßen Stromschienensystems 1 hier jeweils entsprechende elektrische Verbraucher einbringbar bzw. anschließbar sind.

Das Stromschienensystem 1 ist weiterhin so ausgebildet, dass der Abschnitt 3 ein in einer Nut 5 angeordnetes, elektrisch leitfähiges, Element 6 aufweist, welches zentrisch am Abschnitt 3 und äquidistant zu den Verbindungselementen 92 angeordnet ist.

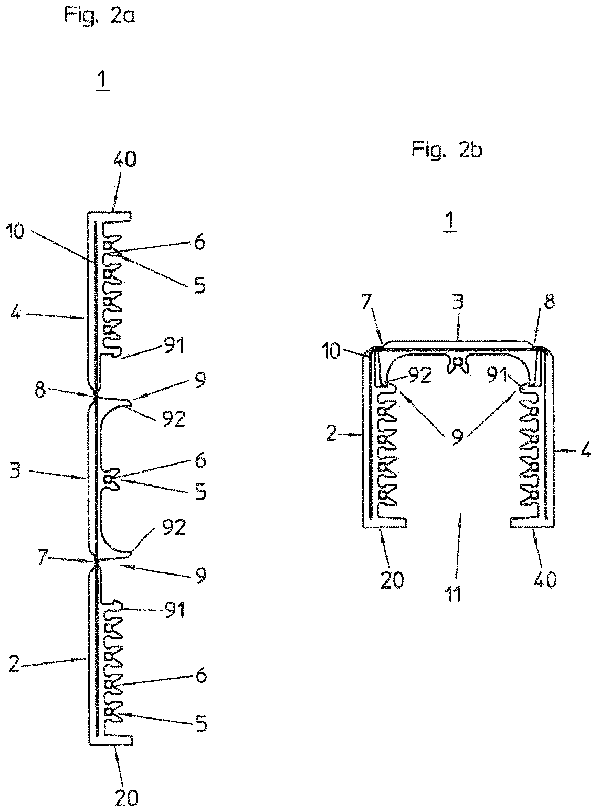

In der Fig. 2a ist eine Schnittdarstellung eines Bausatzes für ein weiteres erfindungsgemäßes Stromschienensystem 1 im ersten Zustand (eZ) dargestellt.
Das Stromschienensystem 1 weist drei in Längsrichtung verlaufende Abschnitte 2, 3, 4 auf, wobei diese Abschnitte 2, 3, 4 zu einem das Stromschienensystem 1 bildenden Hohlkörper verbindbar sind, wobei die drei Abschnitte 2, 3, 4 im Wesentlichen eben und flexibel sind und von dem ersten Zustand (eZ), in welchem die Abschnitte beweglich und von einer ebenen oder parallelen Anordnung aufrollbar in einen zweiten Zustand (zZ).

Der Abschnitt 2, 3, 4 des Stromschienensystems 1 weist wenigstens ein in Längsrichtung des Stromschienensystems 1 in einer Nut 5 verlaufend angeordnetes, elektrisch leitfähiges Element 6 auf, welches in diesem Ausführungsbeispiel aus Metall, insbesondere Kupfer hergestellt und im Querschnitt etwa rund ausgebildet ist
Die Abschnitte 2, 3, 4 sind über wenigstens ein flexibles Element 7, 8 gelenkig miteinander verbunden und die Abschnitte 2, 3, 4 weisen wenigstens eine Verbindungsvorrichtung 9 auf.

Die Abschnitte 2, 3, 4 des Stromschienensystems 1 sind in diesem Ausführungsbeispiel aus einer Kombination der polymeren Werkstoffe Polycarbonat (PC) mit Acrylnitril-Butadien-Styren (ABS) hergestellt und weisen in etwa die gleiche Wandstärke auf.

Das flexible Element 7, 8 verbindet die Abschnitte 2, 3, 4 des Stromschienensystems 1 und ist in diesem Ausführungsbeispiel als sog. Filmscharnier ausgebildet.
Das als Filmscharnier ausgebildete flexible Element 7, 8 weist in diesem Ausführungsbeispiel eine geringere Wandstärke als die Abschnitte 2, 3, 4 des Stromschienensystems 1 auf.
Am flexiblen Element 7, 8 ist eine Verbindungsvorrichtung 9 angeordnet.

Das Stromschienensystem 1 ist in diesem Ausführungsbeispiel so ausgebildet, dass die Verbindungsvorrichtung 9 wenigstens zwei, voreinander durch das flexible Element 7, 8 beabstandet angeordnete, Verbindungselemente 91, 92 aufweist.
Die Verbindungselemente 91, 92 der Verbindungsvorrichtung 9 sind in diesem Ausführungsbeispiel als Rastelemente ausgebildet, die von dem Abschnitt 2, 3, 4 orthogonal wegragend angeordnet sind.

In diesem Ausführungsbeispiel weist der Abschnitt 2, 4 des Stromschienensystems 1 jeweils vier in einer Nut 5 verlaufend angeordnete, elektrisch leitfähige Elemente 6 auf.
Die elektrisch leitfähigen Elemente 6 sind in diesem Ausführungsbeispiel als Kupferdraht ausgebildet.
Der Abschnitt 3 des Stromschienensystems 1 ist in diesem Ausführungsbeispiel so ausgebildet, dass er zwischen den Verbindungselementen 92 zentrisch angeordnet eine Nut 5 mit einem darin angeordneten, elektrisch leitfähigen Element 6 aufweist.

Das erfindungsgemäße Stromschienensystem 1 ist in diesem Ausführungsbeispiel so ausgebildet, dass wenigstens ein Abschnitt 2, 3, 4 wenigstens ein Versteifungselement 10 aufweist. Das Versteifungselement 10 ist etwa mittig in dem Abschnitt 2, 3, 4 angeordnet und verbindet die Abschnitte 2, 3, 4 des Stromschienensystems 1 miteinander.

Das Stromschienensystem 1 ist weiterhin so ausgebildet, dass das flexible Element 7, 8 wenigstens ein Versteifungselement 10 aufweist.

Das Versteifungselement 10 des erfindungsgemäßen Stromschienensystems 1 ist in diesem Ausführungsbeispiel als Metallband mit einer Wanddicke von etwa 0,1 bis 0,8 mm, vorzugsweise 0,2 bis 0,5 mm ausgebildet.

In diesem Ausführungsbeispiel ist das als Metallband ausgebildete Versteifungselement 10 aus dem Werkstoff Aluminium hergestellt und weist jeweils an seinen Oberflächen ein an sich bekanntes Haftvermittlungssystem auf.

In diesem Ausführungsbeispiel ist das erfindungsgemäße Stromschienensystem 1 weiterhin so ausgebildet, dass die Abschnitte 2, 3, 4 einstückig und durch das Versteifungselement 10 miteinander verbunden sind. Die Abschnitte 2, 3, 4 des Stromschienensystems 1 weisen in diesem Ausführungsbeispiel eine Breite auf, die in etwa einem Drittel der Breite des Versteifungselements 10 entspricht.

Das Versteifungselement 10 des Stromschienensystems 1 ist in diesem Ausführungsbeispiel so ausgebildet, dass ein einstückig, sowie etwa mittig in den Abschnitten 2, 3, 4 und dem flexiblen Element 7, 8 stoffschlüssig angeordnet ist.
In diesem Ausführungsbeispiel ist das Versteifungselement 10 des Stromschienensystems 1 an seinen freien Enden beabstandet zu den freien Enden 20, 40 des Abschnittes 2, 4 angeordnet. Die freien Enden 20, 40 der Abschnitte 2, 4 weisen in diesem Ausführungsbeispiel in etwa eine Höhe auf, die der des Verbindungselements 92 entspricht.
Hierdurch kann vorteilhafterweise nach der Herstellung des erfindungsgemäßen Stromschienensystems 1 dies auf an sich bekannte Rollen aufgewickelt und schadensfrei transportiert werden.
Es liegt jedoch auch im Rahmen der Erfindung, dass das Versteifungselement 10 zwischen den Abschnitten 2, 3, 4 als flexibles Element 7, 8 ausgebildet ist.

Das erfindungsgemäße Stromschienensystem 1 kann dabei so ausgebildet sein, dass das flexible Element 7, 8 in einem Ausführungsbeispiel aus einem polymeren Werkstoff hergestellt ist und in einem weiteren vorteilhaften Ausführungsbeispiel aus einem metallischen Werkstoff besteht.

In der Fig. 2b ist eine Schnittdarstellung eines Bausatzes für ein weiteres erfindungsgemäßes Stromschienensystem 1 im zweiten Zustand (zZ) dargestellt.
Die drei Abschnitte 2, 3, 4, sind zu einem das Stromschienensystem 1 bildenden, wenigstens teilweise einen Hohlraum 11 umschließenden, Hohlkörper verbunden.
Die drei Abschnitte 2, 3, 4 sind von dem ersten Zustand (eZ), wie er in Fig. 2a dargestellt ist, in welchem die Abschnitte 2, 3, 4 beweglich und von einer ebenen oder parallelen Anordnung aufrollbar sind nun im zweiten Zustand (zZ), in welchem die Abschnitte 2, 3, 4 das Stromschienensystem 1 bilden, dargestellt.

In diesem Ausführungsbeispiel wurde durch Verschwenken der Abschnitte 2, 4 gegenüber dem Abschnitt 3 des Stromschienensystems 1 jeweils das Verbindungselement 91 mit dem Verbindungselement 92 der Verbindungsvorrichtung 9 so in Wirkverbindung gebracht, dass der Abschnitt 2, 4 jeweils orthogonal zum Abschnitt 3 des Stromschienensystems 1 angeordnet ist. Die Wirkverbindung zwischen dem Verbindungselement 91 und dem Verbindungselement 92 der Verbindungsvorrichtung 9 ist in diesem Ausführungsbeispiel durch eine Verrastung realisiert, so dass die Verbindungselemente 91, 92 miteinander kraftschlüssig und/oder formschlüssig verbunden sind.

Das erfindungsgemäße Stromschienensystem 1 ist weiterhin so ausgebildet, dass die freien Enden 20, 40 der Abschnitte 2, 4 so ausgebildet sind, dass sie die benachbart angeordneten elektrisch leitfähigen Elemente 6 abdecken und so eine gewisse Schutzfunktion für das erfindungsgemäße Stromschienensystem 1 darstellen.

Die Abschnitte 2, 3, 4 des Stromschienensystems 1 sind in diesem Ausführungsbeispiel durch das Versteifungselement 10, welches zwischen den Abschnitten 2, 3, 4 als flexibles Element 7, 8 ausgebildet ist, miteinander verbunden.

Durch diesen erfindungsgemäßen Bausatz für ein Stromschienensystem 1 kann somit zum Transport bzw. der Lagerung des Stromschienensystems 1 im ersten Zustand (eZ) entweder in Fixlängen oder aufgerollt transportiert und erst zur Montage vom ersten Zustand (eZ) in welchem die Abschnitte 2, 3, 4 beweglich sowie von einer ebenen oder parallelen Anordnung aufrollbar sind nun in den zweiten Zustand (zZ), in welchem die Abschnitte das Stromschienensystem 1 bilden, überführt werden.

Das erfindungsgemäße Stromschienensystem 1 zeichnet sich insbesondere dadurch aus, dass die Abschnitte 2, 3, 4 beweglich miteinander verbunden sind und insbesondere durch das flexible Element 7, 8 und die an dem flexiblen Element 7, 8 angeordneten Verbindungsvorrichtungen 9, 9' zu einem funktionsfähigen Stromschienensystem 1 überführbar sind.

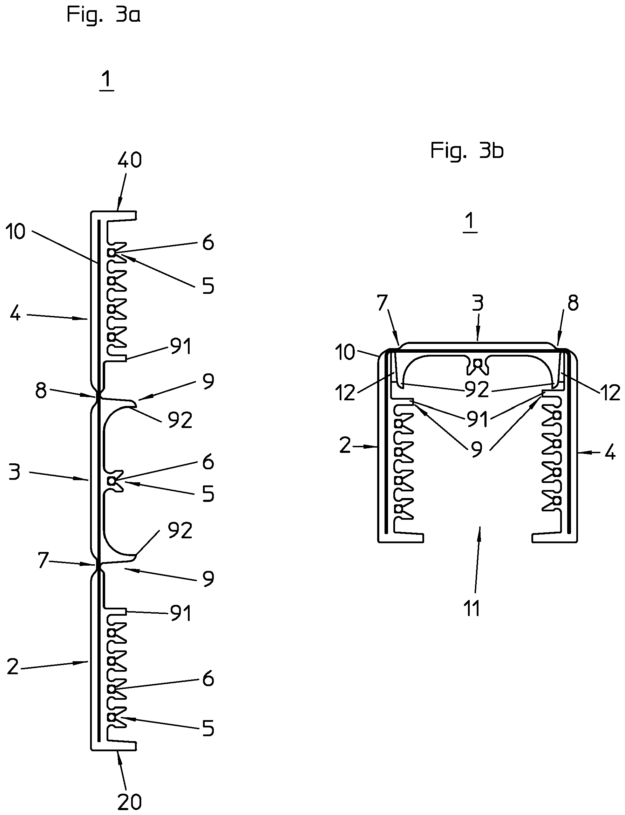

Die Fig. 3a zeigt eine Schnittdarstellung eines Bausatzes für ein weiteres erfindungsgemäßes Stromschienensystem 1 im ersten Zustand (eZ).
Das Stromschienensystem 1 weist drei in Längsrichtung verlaufende Abschnitte 2, 3, 4 auf, wobei die drei Abschnitte 2, 3, 4 zu einem das Stromschienensystem 1 bildenden Hohlkörper verbindbar sind, wobei die drei Abschnitte 2, 3, 4 im Wesentlichen eben und flexibel angeordnet sind.
Der Abschnitt 2, 4 weist in diesem Ausführungsbeispiels jeweils vier in Längsrichtung des Stromschienensystems 1 in jeweils einer Nut 5 verlaufend angeordnete, elektrisch leitfähige Elemente 6 auf. Der Abschnitt 3 weist ein etwa zentrisch angeordnetes, elektrisch leitfähiges Element 6 auf, welches in der Nut 5 angeordnet ist.

Das Stromschienensystem 1 weist weiterhin zwei flexible Elemente 7, 8 auf, wobei das flexible Element 7 den Abschnitt 2 mit den Abschnitt 3 verbindet und das flexible Element 8 den Abschnitt 3 mit den Abschnitt 4.
Das flexible Element 7, 8 ist in diesem Ausführungsbeispiel als sogenanntes Filmscharnier ausgebildet und besteht aus dem gleichen Werkstoff wie die Abschnitte 2, 3, 4. In diesem Ausführungsbeispiel ist das Stromschienensystem 1 aus dem polymeren Werkstoff Polyvinylchlorid (PVC) hergestellt.

Das Stromschienensystem 1 weist in diesem Ausführungsbeispiel am flexiblen Element 7, 8 jeweils eine Verbindungsvorrichtung 9 auf.
Die Verbindungsvorrichtung 9 weist jeweils einander gegenüberliegend angeordnete Verbindungselemente 91, 92 auf, die von dem jeweiligen Abschnitt 2, 3, 4 wegragend angeordnet sind.

Das erfindungsgemäße Stromschienensystem 1 ist weiterhin so ausgebildet, dass wenigstens ein Abschnitt 2, 3, 4 wenigstens ein Versteifungselement 10 aufweist, welches im Querschnitt etwa, mittig in dem Abschnitt 2, 3, 4 angeordnet ist.
Das Versteifungselement 10 des erfindungsgemäßen Stromschienensystems 1 ist so ausgebildet, dass es die drei Abschnitte 2, 3, 4 miteinander versteifend, verbindet.

Das Versteifungselement 10 des Stromschienensystems 1 ist in diesem Ausführungsbeispiel an seinen freien Enden beabstandet zu den freien Enden 20, 40 des Abschnitts 2, 4 angeordnet.

In der Fig. 3b ist eine Schnittdarstellung eines Bausatzes für ein weiteres erfindungsgemäßes Stromschienensystem 1 im zweiten Zustand (zZ) dargestellt.
Die drei Abschnitte 2, 3, 4 sind zu einem das Stromschienensystem 1 bildenden, wenigstens teilweise einen Hohlraum 11 umschließenden, Hohlkörper verbunden.

Die drei Abschnitte 2, 3, 4 sind von dem ersten Zustand (eZ), wie er in der Fig. 3a dargestellt ist, in welchem die Abschnitte 2, 3, 4 beweglich und von einer ebenen oder parallelen Anordnung aufrollbar sind nun im zweiten Zustand (zZ), in welchem die Abschnitte 2, 3, 4 das Stromschienensystem 1 bilden, dargestellt.
Durch ein Verschwenken der Abschnitte 2, 4 gegenüber den Abschnitt 3 des Stromschienensystems 1 wurden die Verbindungselemente 91, 92 der Verbindungsvorrichtung 9 so in Wirkverbindung gebracht, dass der Abschnitt 2, 4 jeweils orthogonal zum Abschnitt 3 des Stromschienensystems angeordnet ist.

Die Wirkverbindung zwischen dem Verbindungselement 92 und den Abschnitt 2, 4 ist in diesem Ausführungsbeispiel durch an sich bekannte Klebstoffe 12 realisiert, so dass das Verbindungselement 92 der Verbindungsvorrichtung 9 stoffschlüssig am jeweiligen Abschnitt 2, 4 verbunden ist.

Es liegt jedoch auch im Rahmen der Erfindung, dass das Verbindungselement 92 der Verbindungsvorrichtung 9 mit dem jeweiligen Abschnitt 2, 4 durch eine Energiequelle wie beispielsweise Laser, Heißluft, Mikrowelle und dergleichen erwärmt und das Verbindungselement 92 der Verbindungsvorrichtung 9 mit dem jeweiligen Abschnitt 2, 4 verschweißt ist.

Das erfindungsgemäße Stromschienensystem 1 ist in diesem Ausführungsbeispiel so ausgebildet, dass die in der jeweiligen Nut 5 angeordneten, elektrisch leitfähigen Elemente 6 einander alternierend gegenüberliegend angeordnet sind.
Die in der Nut 5 des Stromschienensystems 1 angeordneten elektrisch leitfähigen Elemente 6 sind am jeweiligen Abschnitt 2, 4 äquidistant zueinander angeordnet.

## Patentansprüche

1. Bausatz für ein Stromschienensystem (1), welches zumindest teilweise polymere Werkstoffe aufweist, das zumindest drei in Längsrichtung des Stromschienensystems (1) verlaufende Abschnitte (2, 3, 4) umfasst, wobei die drei Abschnitte (2, 3, 4) zu einem das Stromschienensystem (1) bildenden, wenigstens teilweise einen Hohlraum (11) umschließenden, Hohlkörper verbindbar sind, wobei die drei Abschnitte (2, 3, 4) im Wesentlichen eben und flexibel sind und von einem ersten Zustand (eZ), in welchem die Abschnitte (2, 3, 4) beweglich und von einer ebenen oder parallelen Anordnung aufrollbar sind in einen zweiten Zustand (zZ), in welchem die Abschnitte (2, 3, 4) das Stromschienensystem (1) bilden, überführbar sind, wobei die Abschnitte (2, 3, 4) über wenigstens ein flexibles Element (7, 8) gelenkig miteinander verbunden sind und wobei zumindest zwei Abschnitte (2, 3, 4) wenigstens eine Verbindungsvorrichtung (9, 9') aufweisen, **dadurch gekennzeichnet, dass** wenigstens ein Abschnitt (2, 3, 4) wenigstens ein in Längsrichtung des Stromschienensystems (1) in einer Nut (5) vorlaufend angeordnetes, elektrisch leitfähiges Element (6) aufweist, dass wenigstens ein Abschnitt (2, 3, 4) wenigstens ein Versteifungselement (10) aufweist, dass das Versteifungselement (10) die Abschnitte (2, 3, 4) miteinander verbindet, dass das Versteifungselement (10) zwischen den Abschnitten (2, 3, 4) als flexibles Element (7, 8) ausgebildet ist, dass das Versteifungselement (10) etwa mittig in dem Abschnitt (2, 3, 4) angeordnet ist.

2. Stromschienensystem (1) nach Anspruch 1, **dadurch gekennzeichnet, dass** das flexible Element (7, 8) als Filmscharnier ausgebildet ist.

3. Stromschienensystem (1) nach Anspruch 1, **dadurch gekennzeichnet, dass** das flexible Element (7, 8) als Weichscharnier ausgebildet ist.

4. Stromschienensystem (1) nach einem der vorhergehenden Ansprüche, **dadurch gekennzeichnet, dass** wenigstens eine Verbindungsvorrichtung (9, 9') an wenigstens einem flexiblen Element (7, 8) angeordnet ist.

5. Stromschienensystem (1) nach einem der vorhergehenden Ansprüche, **dadurch gekennzeichnet, dass** die Verbindungsvorrichtung (9, 9') wenigstens zwei, voneinander durch wenigstens ein flexibles Element (7, 8) beabstandet angeordnete, Verbindungselemente (91, 91', 92, 92') aufweist.

6. Stromschienensystem (1) nach einem der vorhergehenden Ansprüche, **dadurch gekennzeichnet, dass** die Abschnitte (2, 3, 4) einstückig miteinander verbunden sind.

7. Stromschienensystem (1) nach einem der vorhergehenden Ansprüche, **dadurch gekennzeichnet, dass** die in der Nut (5) angeordneten, elektrisch leitfähigen, Elemente (6) äquidistant zueinander angeordnet sind.

8. Stromschienensystem (1) nach einem der vorhergehenden Ansprüche, **dadurch gekennzeichnet, dass** die in der Nut (5) angeordneten, elektrisch leitfähigen, Elemente (6) alternierend zueinander angeordnet sind.

## Claims

1. An assembly kit for a conductor bar system (1) comprising at least partially polymeric materials, which comprises at least three portions (2, 3, 4) running in the longitudinal direction of the conductor bar system (1), wherein the three portions (2, 3, 4) can be connected to form a hollow body which forms the conductor bar system (1) and at least partially encompasses a cavity (11), wherein the three portions (2, 3, 4) are substantially flat and flexible and can be converted from a first state (eZ), in which the portions (2, 3, 4) are movable and can be rolled up from a flat or parallel arrangement, into a second state (zZ), in which the portions (2, 3, 4) form the conductor bar system (1), wherein the portions (2, 3, 4) are connected to one another in an articulated manner by means of at least one flexible element (7, 8) and wherein at least two portions (2, 3, 4) comprise at least one connection device (9, 9'), **characterised in that** at least one portion (2, 3, 4) has at least one electrically conductive element (6) arranged as to run in a groove (5) in the longitudinal direction of the conductor bar system (1), **in that** at least one portion (2, 3, 4) comprises at least one reinforcement element (10), **in that** the reinforcement element (10) connects the portions (2, 3, 4) together, **in that** the reinforcement element (10) is formed between the portions (2, 3, 4) as a flexible element (7, 8), **in that** the reinforcement element (10) is arranged approximately centrally in the portion (2, 3, 4).

2. A conductor bar system (1) according to Claim 1, **characterised in that** the flexible element (7, 8) is formed as a living hinge.

3. A conductor bar system (1) according to Claim 1, **characterised in that** the flexible element (7, 8) is formed as a soft hinge.

4. A conductor bar system (1) according to one of the preceding claims, **characterised in that** at least one connection device (9, 9') is arranged on at least one flexible element (7, 8).

5. A conductor bar system (1) according to one of the preceding claims, **characterised in that** the connection device (9, 9') has at least two connecting elements (91, 91', 92, 92') arranged spaced apart from each other by at least one flexible element (7, 8).

6. A conductor bar system (1) according to one of the preceding claims, **characterised in that** the portions (2, 3, 4) are connected together in one piece.

7. A conductor bar system (1) according to one of the preceding claims, **characterised in that** the electrically conductive elements (6) arranged in the groove (5) are arranged equidistant from each other.

8. A conductor bar system (1) according to one of the preceding claims, **characterised in that** the electrically-conductive elements (6) arranged in the groove (5) are arranged in alternation with each other.

## Revendications

1. Kit de construction pour un système de barres conductrices (1), qui présente au moins en partie des matières polymères, ledit kit de construction comprenant au moins trois portions (2, 3, 4) s'étendant dans la direction longitudinale du système de barres conductrices (1), les trois portions (2, 3, 4) pouvant être reliées en un corps creux entourant au moins en partie un espace creux (11) et formant le système de barres conductrices (1), les trois portions (2, 3, 4) étant sensiblement plans et flexibles et pouvant être passées d'un premier état (eZ), dans lequel les portions (2, 3, 4) sont mobiles et peuvent être enroulés depuis une disposition plane ou parallèle, à un second état (zZ), dans lequel les portions (2, 3, 4) forment le système de barres conductrices (1), les portions (2, 3, 4) étant reliées entre eux de manière articulée par le biais d'au moins un élément flexible (7, 8) et au moins deux portions (2, 3, 4) présentant au moins un dispositif de liaison (9, 9'), **caractérisé en ce qu'**au moins une portion (2, 3, 4) présente au moins un élément (6) électriquement conducteur disposé s'étendant dans une rainure (5) dans la direction longitudinale du système de barres conductrices (1), **en ce qu'**au moins une portion (2, 3, 4) présente au moins un élément de renforcement (10), **en ce que** l'élément de renforcement (10) relie les portions (2, 3, 4) entre elles, **en ce que** l'élément de renforcement (10) est réalisé sous la forme d'un élément flexible (7, 8) entre les portions (2, 3, 4), **en ce que** l'élément de renforcement (10) est disposé approximativement au centre dans la portion (2, 3, 4).

2. Système de barres conductrices (1) selon la revendication 1, **caractérisé en ce que** l'élément flexible (7, 8) se présente sous la forme d'une charnière souple dans le même matériau.

3. Système de barres conductrices (1) selon la revendication 1, **caractérisé en ce que** l'élément flexible (7, 8) se présente sous la forme d'une charnière flexible dans un matériau différent.

4. Système de barres conductrices (1) selon l'une des revendications précédentes, **caractérisé en ce qu'**au moins un dispositif de liaison (9, 9') est disposé sur au moins un élément flexible (7, 8).

5. Système de barres conductrices (1) selon l'une des revendications précédentes, **caractérisé en ce que** le dispositif de liaison (9, 9') présente au moins deux éléments de liaison (91, 91', 92, 92') disposés espacés l'un de l'autre par au moins un élément flexible (7, 8).

6. Système de barres conductrices (1) selon l'une des revendications précédentes, **caractérisé en ce que** les portions (2, 3, 4) sont reliés entre eux d'un seul tenant.

7. Système de barres conductrices (1) selon l'une des revendications précédentes, **caractérisé en ce que** les éléments (6) électriquement conducteurs disposés dans la rainure (5) sont disposés à équidistance les uns des autres.

8. Système de barres conductrices (1) selon l'une des revendications précédentes, **caractérisé en ce que** les éléments (6) électriquement conducteurs disposés dans la rainure (5) sont disposés en alternance les uns avec les autres.
